# EUROPEAN PATENT APPLICATION

(11) **EP 2 682 191 A2**
(43) Date of publication of application: **08.01.2014**
(21) Application number: 12183671.2
(22) Date of filing: 10.09.2012
(51) Int. Cl.: B03B 5/44, B03B 9/06

(54) **A method for utilization of waste electric and electronic equipment**

(30) Priority: 02.07.2012 PL 39975412
(71) Applicant: Syntom S.A., 03-352 Warszawa (PL)
(72) Inventor: Murzynski, Pawel, 09-409 Plock (PL)
(74) Representative: Pawlowski, Adam

(57) **Abstract**

A method for utilization of waste electric and electronic equipment, whereby the waste material is separated into a magnetic fraction, a fraction of other metals and a non-metallic fraction, comprising the steps of: fragmenting waste electric and electronic equipment using a ring shredder (101), separating magnetic fraction (103) using a vibrating gutter (102) and a magnetic separator located above the gutter, sorting the residues by means of a rotary separator (104) into a light fraction (113) and a heavy fraction (105, 106), dividing the heavy fraction into two size groups (105, 106), supplying each size group (105, 106) into an eddy current separator (107, 108) to be separated into a metallic fraction (111, 112) and a non-metallic fraction (109, 110), supplying the non-metallic fractions (109, 110) together with the light fraction (113) to a knife shredder (114) to be fragmented into pieces smaller than 15 mm, from which magnetic fraction (116) is separated using a vibrating gutter (115) and magnetic separator located above the gutter, directing the rest (117) to a liquid separator table (120), wherein a metallic fraction (123) is separated from lighter elements (122) by washing the material on the liquid separator table (120) by using a water-glycerine solution of lipase enzyme obtained by mixing from 0.005% to 0.025% by weight of a powdered lipase enzyme with a 5% water-solution of glycerine, and during the utilization process, refilling water and systematically batching the lipase enzyme in order to retain the concentration of the enzyme from 0.005% to 0.025% by weight in the water-glycerine solution.

## Description

The present invention relates to a method for utilization of waste electric and electronic equipment.

The growing amount of waste electric and electronic equipment (WEEE) requires more and more efficient technologies of utilization, which should guarantee high quantitative and qualitative efficiency. One of the most important aspects of the qualitative efficiency is precise separation of metallic and non-metallic fraction, which allows for effective recycling of the individual scrap fractions.

Existing processes of waste electric and electronic equipment recycling concern mainly basic separation of elements, but do not guarantee precise separation of small elements. For example, American patent no. US4940187 describes a recycling method, whereby batch material is cut into pieces, from which plastics are separated, and magnetic separator separates iron material from non-iron metals and plastics. Next, liquid gravity separator separates plastics of different density using clean water.

The aim of the invention is the development of a method for utilization of waste electric and electronic equipment, providing high quantitative and qualitative efficiency, in particular, precise separation of metallic and non-metallic scrap fraction.

The object of the invention is a method for utilization of waste electric and electronic equipment, whereby the waste material is separated into a magnetic fraction, a fraction of other metals and a non-metallic fraction, comprising the steps of fragmenting waste electric and electronic equipment using a ring shredder, separating magnetic fraction using a vibrating gutter and a magnetic separator located above the gutter, sorting the residues by means of a rotary separator into a light fraction and a heavy fraction, dividing the heavy fraction into two size groups, supplying each size group into an eddy current separator to be separated into a metallic fraction and a non-metallic fraction, supplying the non-metallic fractions together with the light fraction to a knife shredder to be fragmented into pieces smaller than 15 mm, from which magnetic fraction is separated using a vibrating gutter and magnetic separator located above the gutter, directing the rest to a liquid separator table, wherein a metallic fraction is separated from lighter elements by washing the material on the liquid separator table by using a water-glycerine solution of lipase enzyme obtained by mixing from 0.005% to 0.025% by weight of a powdered lipase enzyme with a 5% water-solution of glycerine, and during the utilization process, refilling water and systematically batching the lipase enzyme in order to retain the concentration of the enzyme from 0.005% to 0.025% by weight in the water-glycerine solution.

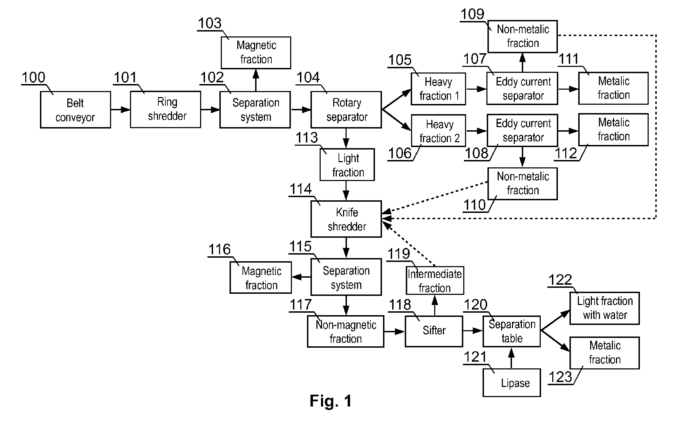

The present invention is shown by means of exemplary embodiment on a drawing, in which Fig. 1 presents a diagram of a technological line for waste electric and electronic equipment utilization using the method according to the invention.

Scrap in the form of waste electric and electronic equipment is transported by a crane with a grab and rotary head to a belt conveyor 100, where manual sorting of scrap is performed in order to separate undesirable elements, which are not suited for direct processing in the further elements of the line. Sorted scrap is transported to ring shredder 101, where it is fragmented into pieces. Scrap pieces are submitted to a separation system for magnetic fraction 102, that is vibrating gutter and magnetic separator located above the gutter. This way magnetic elements are transported from the stream of fragmented material to the belt conveyor for magnetic fraction 103. Deironed scrap is immediately directed to rotary wind separator 104, where the material is separated into two heavy fractions and one light fraction. Heavy fraction is a mixture consisting mostly of non-iron metal pieces, together with heavy metals, but the first fraction contains larger elements than the second fraction, and the size segregation of fraction elements depends on the size of sieves mounted in the rotary separator 104. Heavy fractions are taken by belt conveyors 105 and 106 and transported to eddy current separators 107, 108, where non-metallic elements, such as plastic, rubber, wood, glass, stones and earth are separated from heavy fraction. Non-metallic fractions are transported by belt conveyor 109, 110 to knife shredder 114. Purified metallic fractions constitute final product, which is stored in containers 111,112. Light fraction retrieved from the rotary separator 104 by belt conveyor 113 is mainly composed of isolated wires, for example aluminium foil, light plastics, rubber, wood and earth. Fractions from the conveyors 109, 110, 113 are transported to the knife shredder 114. The knife shredder 114 is equipped with exchangeable sieve with round mesh of a diameter selected for the type of processed scrap in the scope of 10 mm to 15 mm. The batch material is supplied from a buffer tank to the hopper of the shredder, in which rotary rack-type knives together with stationary knives shred the material, which leaves the shredder 114 through the sieve. The shredded material is supplied to the separation system for magnetic fraction 115, that is vibrating gutter and magnetic separator located above the gutter, which removes the remaining magnetic elements released from the processed material, after which the magnetic fraction is directed to the container 116, and non-magnetic fraction - to the container 117. Magnetic fraction constitutes final product, which is stored in the container 116. Non-magnetic fraction from the container 117 is further directed to a sifter 118, on which potential too large pieces are separated, and return through the feeder 119 to the knife shredder 114. The small elements are transported onto the liquid separator table 120, on which precise final separation is conducted.

On the liquid separator table 120 usable metals, including precious metals, are separated from other elements. The intermediate, not entirely separated elements are directed back to the shredder 114. Metallic fraction is supplied to the container 123 and constitutes final product. Light fraction is supplied with water to the container 122. where, after dehydration, it constitutes final product as well. For successful separation of metals from other elements, a water-glycerine solution of lipase enzyme is applied o the liquid separator table. This solution is obtained by mixing 0.005% to 0.025% of powdered lipase enzyme in 5% glycerine water solution (i.e. 5% of glycerine in water by weight). During the process, part of the wash solution, approx. 10% per hour, is removed together with the output material, so in order to compensate for this loss, water is refilled continuously together with systematic, e.g. every hour, dose of lipase enzyme to maintain the concentration of the enzyme to at least minimum level. Note however that an alternative solution for glycerine solution is any other solution of higher alcohol with water, which reduces the surface tension of the solution and limits its frothing.

### Example

In order to prepare the initial batch of a solution washing up to 3,000 I of 5% water glycerine solution, 500 g of lipase enzyme was added in the form of preparation ABS Lipidase 10,000 by American Biosystems (with its headquarters in Roanoke, USA), obtaining the concentration of 0.017%. The shortage of the solution is 10%, so every hour, with systematic refilling the solution with water, the concentration of the enzyme falls to approx. 0.015%. 50 g of enzyme was batched every hour, increasing the concentration of enzyme in the solution to approx. 0.017%.

The application of lipase enzyme allowed to effectively clean the washed material from pollutants, such as fat, grease and oil, which, thanks to this enzyme, underwent hydrolysis to make compounds soluble in water, i.e. alcohols and fatty acids, which made them easily washable on the separation table 120.

## Claims

1. A method for utilization of waste electric and electronic equipment, whereby the waste material is separated into a magnetic fraction, a fraction of other metals and a non-metallic fraction, **characterized by** comprising the steps of:
- fragmenting waste electric and electronic equipment using a ring shredder (101),
- separating magnetic fraction (103) using a vibrating gutter (102) and a magnetic separator located above the gutter,
- sorting the residues by means of a rotary separator (104) into a light fraction (113) and a heavy fraction (105, 106),
- dividing the heavy fraction into two size groups (105, 106),
- supplying each size group (105, 106) into an eddy current separator (107, 108) to be separated into a metallic fraction (111, 112) and a non-metallic fraction (109, 110),
- supplying the non-metallic fractions (109, 110) together with the light fraction (113) to a knife shredder (114) to be fragmented into pieces smaller than 15 mm, from which magnetic fraction (116) is separated using a vibrating gutter (115) and magnetic separator located above the gutter,
- directing the rest (117) to a liquid separator table (120), wherein a metallic fraction (123) is separated from lighter elements (122) by washing the material on the liquid separator table (120) by using a water-glycerine solution of lipase enzyme obtained by mixing from 0.005% to 0.025% by weight of a powdered lipase enzyme with a 5% water-solution of glycerine,
- during the utilization process, refilling water and systematically batching the lipase enzyme in order to retain the concentration of the enzyme from 0.005% to 0.025% by weight in the water-glycerine solution.
